(19) **Europäisches Patentamt**
**European Patent Office**
**Office européen des brevets**

(11) **EP 3 048 280 B1**

(12) **EUROPEAN PATENT SPECIFICATION**

(45) Date of publication and mention
of the grant of the patent:
**13.09.2017 Bulletin 2017/37**

(51) Int Cl.:
**F02B 37/18** *(2006.01)* **F02D 41/02** *(2006.01)*
**F02D 41/00** *(2006.01)*

(21) Application number: **16150216.6**

(22) Date of filing: **05.01.2016**

(54) **SYSTEMS AND METHODS FOR CONTROL OF TURBOCHARGER WASTEGATE**

SYSTEME UND VERFAHREN ZUR STEUERUNG EINES TURBOLADER-BYPASSVENTILS

SYSTÈMES ET PROCÉDÉS DE COMMANDE DE SOUPAPE DE DÉCHARGE DE TURBOCOMPRESSEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.01.2015 US 201514604081**

(43) Date of publication of application:
**27.07.2016 Bulletin 2016/30**

(73) Proprietor: **General Electric Company**
**Schenectady, NY 12345 (US)**

(72) Inventors:
• **FLAVIN, Daniel Joseph**
**Greenville, SC South Carolina 29615-4614 (US)**

• **SORGE, Gregory Walter**
**Waukesha, WI Wisconsin 53188-4961 (US)**

(74) Representative: **Foster, Christopher Michael et al**
**General Electric Technology GmbH**
**GE Corporate Intellectual Property**
**Brown Boveri Strasse 7**
**5400 Baden (CH)**

(56) References cited:
**EP-A1- 2 803 842 WO-A2-02/061255**
**JP-A- 2009 180 112 US-A1- 2009 090 107**
**US-A1- 2014 060 041**

**Description**

The subject matter disclosed herein relates to internal combustion engines, and more particularly, to systems and methods for controlling a turbocharger wastegate.

Combustion engines combust fuel to generate motion of certain interior components within the engine which is then typically used to power a drive train, a generator, or other useful system. Combustion engines typically combust a carbonaceous fuel, such as natural gas, gasoline, diesel, and the like, and use the corresponding expansion of high temperature and pressure gases to apply a force to certain components of the engine, e.g., piston disposed in a cylinder, to move the components over a distance. Each cylinder may include one or more valves that open and close correlative with combustion of the carbonaceous fuel. For example, an intake valve may direct an oxidant such as air into the cylinder, which is then mixed with fuel and combusted. Combustion fluids, e.g., hot gases, may then be directed to exit the cylinder via an exhaust valve. The engine may include a turbocharger to increase the pressure and/or quantity of air that combines with the fuel within the cylinder. The turbocharger may work by rotating two sides of a rotor. The first receives pressure from exhaust gas which rotates blades of the turbocharger. The other side of the turbocharger also has blades that spin and force additional oxidant into the cylinder of the engine. Accordingly, the carbonaceous fuel is transformed into mechanical motion, useful in driving a load. For example, the load may be a generator that produces electric power. It is important to control the output of the turbocharger to obtain a desired engine condition.

EP2803842A1 discloses a control apparatus for an internal combustion engine including: a turbo-supercharger; an exhaust gas purifying catalyst disposed in an exhaust passage on the downstream side of a turbine; and a WGV capable of opening and closing an exhaust bypass passage that bypasses the turbine. WO 02/061255A2 discloses a system for estimating turbocharger compressor outlet temperature including an engine controller responsive to any two of corrected turbocharger speed, corrected fresh mass air flow and turbocharger compressor pressure ratio to compute compressor outlet temperature based on a corresponding compressor outlet temperature model. US2014/060041A1 discloses a wastegate valve controller provided in an internal combustion engine including a supercharger wherein a desired wastegate valve opening degree is set in accordance with a driving condition of an internal combustion engine based on a detected rotation speed of the internal combustion engine and a set desired wastegate valve opening degree. US2009/090107A1 discloses a method for controlling a turbocharger using a physical model of the turbocharger speed with an application for controlling an internal-combustion engine.

Certain embodiments commensurate in scope with the originally claimed invention are summarized below. These embodiments are not intended to limit the scope of the claimed invention, but rather these embodiments are intended only to provide a brief summary of possible forms of the invention. Indeed, the invention may encompass a variety of forms that may be similar to or different from the embodiments set forth below. The first embodiment encompasses a system according to claim 1. The second embodiment encompasses a method for controlling a wastegate according to claim 6. The third embodiment encompasses one or more non-transitory computer-readable media according to claim 11. Various features, aspects, and advantages of the present invention will become better understood when the following detailed description is read with reference to the accompanying drawings in which like characters represent like parts throughout the drawings, wherein:

FIG. 1 is a block diagram of an embodiment of an engine driven system (e.g., engine driven power generation system) having an internal combustion system coupled to a turbocharger that is coupled to a wastegate;

FIG. 2 is a block diagram of an embodiment of a controller (e.g., an electronic control unit (ECU));

FIG. 3 is a flow chart of an embodiment of a computer-implemented method for controlling a wastegate position; and

FIG. 4 is a graphical representation of parametric curve-based control versus proportional-based control of a wastegate.

One or more specific embodiments of the present invention will be described below. In an effort to provide a concise description of these embodiments, all features of an actual implementation may not be described in the specification. It should be appreciated that in the development of any such actual implementation, as in any engineering project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of fabrication, and manufacture for those of ordinary skill having the benefit of this disclosure.

When introducing elements of various embodiments of the present invention, the articles "a," "an," "the," and "said" are intended to mean that there are one or more of the elements. The terms "comprising," "including," and "having" are intended to be inclusive and mean that there may be additional elements other than the listed elements.

During use, a turbocharger forces extra air (and proportionally more fuel) into a combustion chamber of a combustion engine increasing the power and/or the efficiency (e.g., fuel efficiency) of the combustion engine. This is achieved via the recovery of waste energy from the exhaust of the combustion engine which is fed back into the intake of the engine. For example, the engine exhaust drives a turbine wheel in a turbine of the turbocharger and is discharged through an exhaust system. The turbine wheel drives a shaft coupled to a compressor wheel in a compressor of the turbocharger which pressurizes intake air, previously at atmospheric pressure, and forces it typically through an intercooler and over a throttle valve and into an engine intake manifold. Boost pressure is limited to keep the entire engine system, including the turbocharger, inside operating range (e.g., thermal and mechanical design operating ranges). Controlling the output of the turbocharger is important to obtain a desired engine operation. A wastegate (e.g., wastegate valve) may be disposed between exhaust manifold discharge and the exhaust system to regulate the turbocharger by diverting exhaust energy from the turbine. However, approaches to controlling or regulating the wastegate typically are time consuming, complex, and/or inefficient. For example, a wastegate map (e.g., calibrated two-dimensional map utilizing speed and intake manifold points as references for wastegate valve position) may be utilized. However, utilizing the wastegate map involves a lot of development time spent acquiring different calibration factors (e.g., specific to fuel and engine configuration). In addition, during first startup, there are complexities associated with implementing a learning algorithm that utilizes the wastegate map and shifts points to change wastegate valve position to achieve a desired throttle reserve. Alternatively, mechanical proportional wastegate control may be utilized that, for example, utilizes pressure sensing lines from the boost pressure outlet and the intake manifold coupled to a diaphragm that actuates the wastegate valve position to achieve a desired differential pressure or reserve across the throttle. However, the proportional control approach may not respond fast enough in presence of extreme low reserve or extreme high reserve (e.g., near turbo surge).

As described in further detail below, systems and methods are provided for controlling the wastegate (e.g., wastegate valve) position involving a simple electronic control algorithm (e.g., having a single input and single output). For example, a pressure differential (e.g., reserve) between the compressor discharge pressure (e.g., boost pressure) and the intake manifold pressure may be solely utilized in controlling the wastegate. For example, the pressure differential may serve as the sole input in the electronic control algorithm (e.g., nonlinear parametric equation). The simple electronic control algorithm enables a faster response in adjusting the wastegate in response to extreme low or high throttle reserves without gain scheduling, while also providing a more stable engine operation inside the desired operating window. Also, the simple electronic control algorithm removes the opportunity for configuration errors when selecting calibration. It also avoids the need for a learning algorithm and its associated complexities. Further, it requires no additional hardware. Overall, the simple electronic control algorithm provides a wastegate control system that is less complex and more efficient that improves the efficiency of the engine system.

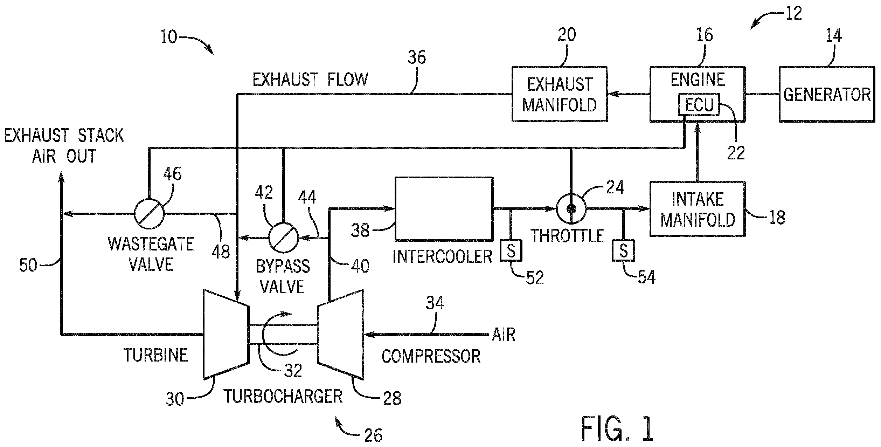

Turning to the drawings, FIG. 1 illustrates a block diagram of an embodiment of an engine driven system 10 (e.g., engine driven power generation system) having an internal combustion system 12 coupled to a turbocharger that is coupled to a wastegate. The system 10 may include a vehicle, such as a locomotive, an automobile, a bus, or a boat. Alternatively, the system 10 may include a stationary system, such as a power generation system having the internal combustion system 12 coupled to an electrical generator 14. Besides power generation, the system 10 may be utilized in other applications such as those that recover heat and utilize the heat (e.g., combined heat and power applications), combined heat, power, and cooling applications, applications that also recover exhaust components (e.g., carbon dioxide) for further utilization, gas compression applications, and mechanical drive applications.

The internal combustion system 12 includes an engine 16 (e.g., a reciprocating internal combustion engine) having one or more combustion chambers (e.g., 1, 2, 3, 4, 5, 6, 7, 8, 10, 12, 14, 16, 18, 20, or more combustion chambers). An air supply is configured to provide a pressurized oxidant, such as air, oxygen, oxygen-enriched air, oxygen-reduced air, or any combination thereof, to each combustion chamber. The combustion chamber is also configured to receive a fuel (e.g., a liquid and/or gaseous fuel) from a fuel supply, and a fuel-air mixture ignites and combusts within each combustion chamber. The hot pressurized combustion gases cause a piston adjacent to each combustion chamber to move linearly within a cylinder and convert pressure exerted by the gases into a rotating motion, which causes a shaft to rotate. Further, the shaft may be coupled to a load, which is powered via rotation of the shaft. For example, the load may be any suitable device that may generate power via the rotational output of the system 10, such as the electrical generator 14. Additionally, although the following discussion refers to air as the oxidant, any suitable oxidant may be used with the disclosed embodiments. Similarly, the fuel may be any suitable gaseous fuel, such as natural gas, associated petroleum gas, propane, biogas, sewage gas, landfill gas, and coal mine gas, for example. Also, the fuel may be any suitable liquid fuel, such as gasoline, diesel, and alcohol fuels, for example.

The engine 16 may be a two-stroke engine, three-stroke engine, four-stroke engine, five-stroke engine, or six-stroke engine. The engine 16 may also include any number of combustion chambers, pistons, and associated cylinders (e.g., 1-24). For example, in certain embodiments, the system 10 may include a large-scale industrial reciprocating engine having 4, 6, 8, 10, 16, 24 or more pistons reciprocating in cylinders. In some such cases, the cylinders and/or the pistons may have a diameter of between approximately 13.5 - 34 centimeters (cm). In some embodiments, the cylinders and/or the pistons may have a diameter of between approximately 10-40 cm, 15-25 cm, or about 15 cm. The system 10 may generate power ranging from 10 kW to 10 MW. In some embodiments, the engine 16 may operate at less than approximately 1800 revolutions per minute (RPM). In some embodiments, the engine 16 may operate at less than approximately 2000 RPM, 1900 RPM, 1700 RPM, 1600 RPM, 1500 RPM, 1400 RPM, 1300 RPM, 1200 RPM, 1000 RPM, 900 RPM, or 750 RPM. In some embodiments, the engine 16 may operate between approximately 750-2000 RPM, 900-1800 RPM, or 1000-1600 RPM. In some embodiments, the engine 16 may operate at approximately 1800 RPM, 1500 RPM, 1200 RPM, 1000 RPM, or 900 RPM. Exemplary engines 16 may include General Electric Company's Jenbacher Engines (e.g., Jenbacher Type 2, Type 3, Type 4, Type 6 or J920 FleXtra) or Waukesha Engines (e.g., Waukesha VGF, VHP, APG, 275GL), for example.

The internal combustion system 12 includes the engine 16 having an intake manifold 18, an exhaust manifold 20, and a controller 22 (e.g., an engine control unit (ECU)). The internal combustion system 12 also includes a throttle 24 that regulates the amount of air entering the engine 16 via the intake manifold 18. The intake manifold 18 and the exhaust manifold 20 of the engine 16 are functionally coupled to a turbocharger 26. The turbocharger 26 includes a compressor 28 coupled to a turbine 30 via a drive shaft 32. The compressor 28 receives air via an air intake duct 34. The air (e.g., at atmospheric/barometric pressure) is drawn in via the air intake duct 34 under partial vacuum created by a compressor wheel in the compressor 28. The compressor wheel is driven by the shaft 32 which is driven by a turbine wheel in the turbine 30. The turbine wheel is driven by engine exhaust provided to the turbine 30 via an engine exhaust duct 36 which is connected to the exhaust manifold 20 of the engine 16.

The output of the compressor 28 is coupled to an intercooler 38 via a compressor discharge duct 40. The compressor wheel compresses intake air and forces it through the compressor discharge duct 40 to the intercooler 38 which functions as a heat exchanger removing excess heat from the turbocharged intake air. Turbocharged intake air is then channeled to the throttle 24, the intake manifold 18, and the engine 16. The throttle 24 creates a pressure differential depending on its pressure position, such that air pressure into the throttle 24 is at compressor discharge pressure (e.g., boost pressure) and air pressure out of the throttle is at intake manifold pressure. The pressure differential (i.e., difference between the compressor discharge pressure and the intake manifold pressure), $\Delta P$, is also known as the reserve (e.g., throttle reserve) or reserve pressure.

The system 10 also includes a bypass valve 42 in a bypass duct 44. The bypass duct 44 couples the compressor discharge duct 40 to the engine exhaust duct 36. The bypass valve 42 functionally relieves pressure in the compressor discharge duct 24 and increases airflow through the compressor 28 by regulating airflow through the bypass duct 44. For example, the bypass valve 42 is closed during startup because the engine exhaust pressure in the engine exhaust duct 36 is greater than the compressor discharge pressure in the compressor discharge duct 40. Once the engine 16 is running at minimum idle speed, the bypass valve 42 is regulated (e.g., opened, closed, opened at various angles, etc.) to regulate compressor discharge pressure and mass airflow. In certain embodiments, the system 10 may not include a bypass valve 42.

The system 10 also includes a wastegate or wastegate valve 46 disposed in a discharge duct 48. The discharge duct 48 couples the engine exhaust duct 36 to an exhaust discharge duct 50. The discharge duct 50 is also coupled to the turbine 30. The wastegate 46 functionally regulates the amount of engine exhaust provided to the turbine 30 of the turbocharger 26 and thus the compressor discharge pressure produced by the compressor 28. For example, by diverting engine exhaust in the engine exhaust duct 36 to the exhaust discharge duct 50, the wastegate 46 decreases exhaust mass airflow to the turbine 30 which decreases the compressor discharge pressure produced by the compressor 30. For example, the wastegate 46 may be closed during engine startup to direct the full engine exhaust through the turbine 30 to drive the turbine wheel which drives the shaft 32 and the compressor wheel until the intake manifold pressure reaches a minimum level. The more the wastegate 46 is open during operation of the engine 16, the more engine exhaust is diverted from the turbocharger 26 to regulate the intake manifold pressure. The wastegate 46 may include any variable controlled valve (e.g. butterfly valve, gate valve, poppet valve, etc.).

The controller 22 is coupled to the throttle 24, the bypass valve 42, the wastegate valve 46, and their associated actuators. The controller 22 sends control signals to the actuators of the throttle 24, the bypass valve 42, and the wastegate valve 46 to adjust the respective positions (e.g., open, close, open at a certain angle, etc.) of the throttle 24, the bypass valve 42, and the wastegate valve 46. The controller 22 is also coupled to various sensors and devices throughout the system 10 (including the internal combustion system 12 and the turbocharger 26). For example, the controller 22 is coupled to a sensor 52 disposed upstream of the throttle 24 between the intercooler 38 and the throttle 24. Sensor 52 (e.g., pressure sensor) measures the compressor discharge pressure and provides a signal representative of the compressor discharge pressure to the controller 22. The controller 22 is also coupled to a sensor 54 disposed downstream of the throttle 24 between the throttle 24 and the intake manifold 18. Sensor 54 (e.g., pressure sensor) measures the intake manifold pressure and provides a signal representative of the intake manifold pressure to the controller 22. The sensors 52, 54 may be disposed along the flow path between the intercooler 38 and the intake manifold 18. Alternatively, the sensors 52, 54 may be disposed along sensing lines extending from the flow path between the intercooler 38 and the intake manifold 18. In certain embodiments, the controller 22 may be coupled to other sensors and control features of the system 10. The controller 22 may receive the signals from the sensors 52, 54 and determine the differential pressure or reserve across the throttle 24. Solely from the differential pressure, the controller 22 determines and controls (e.g., maintains and/or adjusts) the position of the wastegate 46 utilizing an electronic control algorithm. The electronic control algorithm may include a nonlinear parametric equation. The nonlinear parametric equation may be a univariate polynomial. The differential pressure serves as the single input into the equation and the position of the wastegate valve is the single output of the equation. In certain embodiments, the single output is the percentage open of the wastegate valve. In other embodiments, the single output is the percentage closed of the wastegate valve. In certain embodiments, the univariate polynomial may include a multi-order or degree polynomial such as a third order polynomial. The nonlinear parametric equation may represented by

$$y = 0.0334x^3 - 3.8663x^2 + 149.36x - 1910.3, \qquad (1)$$

where y represents the position of the wastegate valve (e.g., percentage open) and x represents the pressure differential across the throttle 24 or throttle reserve, $\Delta P$. The nonlinear parametric equation may define a curve that represents the position of the wastegate 46 relative to the differential pressure, the curve may include a first portion representing a desired reserve operating range, a second portion representing a lower reserve range outside the desired reserve operating range, and a third portion representing a higher reserve range outside the desired reserve operating range. In certain embodiments, the first portion of the curve has a first rate of adjustment of the position of the wastegate 46, the second portion of the curve has a second rate of adjustment of the position of the wastegate 46, the third portion of the curve has a third rate of adjustment of the position of the wastegate 46, and both the second and third rates of adjustment are greater than the first rate of adjustment. Utilizing the electronic control algorithm, the controller 22 may be able to respond faster than a mechanical proportional control approach to the reserve being outside a desired operating range. In certain embodiments, the desired operating regime or range for the pressure differential may range from approximately 33.86 to 47.41 kPa, 33.86 to 40.00 kPa, 47.41 to 40 kPa, and all subranges therebetween. Thus, in the presence of extreme low reserve or extreme high reserve (e.g., near turbo surge) outside the desired operating range, the controller 22 may adjust the position of the wastegate valve 46 quicker than if the reserve is within the desired operating range. In addition, utilizing the electronic control algorithm enables the determination of and the adjustment of the position of the wastegate 46 without gain scheduling.

In some embodiments, the system 10 may not include all of the components illustrated in FIG. 1. In addition, the system 10 may include additional components such as control components, aftertreatment components, and/or heat recovery components. The system 10 may include more than one intercooler 18. Also, the system 10 may include a variety of valves (e.g., fuel valves, pressure valves, etc.).

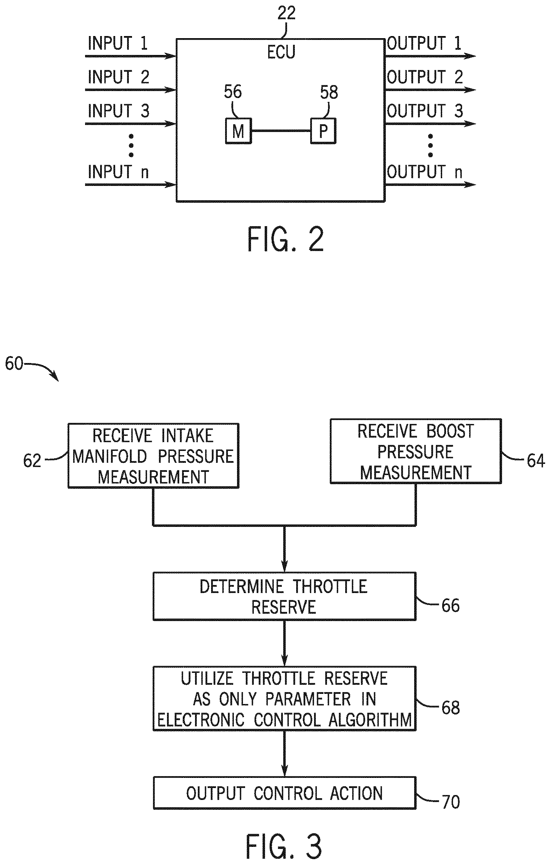

As mentioned above, the controller 22 generally controls the operation of the internal combustion system 12 and other components of the system 10. FIG. 2 is a block diagram of an embodiment of the controller 22. The controller 22 includes non-transitory code or instructions stored in a machine-readable medium (e.g., memory 56) and used by a processor (e.g., processor 58) to implement the techniques disclosed herein. The memory 56 may store electronic control algorithm that defines wastegate position relative to a determined reserve. In certain embodiments, the desired operating regime or range for the pressure differential may range from approximately 33.86 to 47.41 kPa, 33.86 to 40.00 kPa, 47.41 to 40 kPa, and all subranges therebetween. The desired operating range for the pressure differential may vary depending on the engine 16. In certain embodiments, the pressure differential values for the desired pressure differential operating range may be higher or lower than the above values. The memory 56 may store various tables and/or models (e.g., software models representing and/or simulating various aspects of the combustion system 12 and each component of the system 10). The lookup tables may include desired valve positions for certain operating conditions. For example, a lookup table may include specific wastegate valve positions (e.g., percentage open, percentage close, angle, etc.) for specific reserve or differential pressures. In certain embodiments, the memory 56 may be wholly or partially removable from the controller 22. The controller 22 receives one or more inputs signals (input$_1$ ... input$_n$) from sensors, actuators, and other components (e.g., user interface) of the system 10 and outputs one or more output signals (output$_1$ ... output$_n$) to the sensors, actuators, and other components of the system 10. The controller 22 may utilize one or more types of models (e.g., software-based models executable by a processor). For the example, the models may include physics-based models such as low cycle fatigue (LCF) life prediction models, computational fluid dynamics (CFD) models, finite element analysis (FEA) models, solid models (e.g., parametric and non-parametric modeling), and/or 3-dimension to 2-dimension FEA mapping models that may be used to predict the risk of equipment malfunction or the need for equipment maintenance. The models may also include statistical models, such as regression analysis models, data mining models (e.g., clustering models, classification models, association models), and the like. For example, clustering techniques may discover groups or structures in the data that are in some way "similar". Classification techniques may classify data points as members of certain groups, for example, field device having a higher probability of encountering an unplanned maintenance event. Regression analysis may be used to find functions capable of modeling future trends within a certain error range. Association techniques may be used to find relationship between variables. Also, fuzzy logic models may be utilized. Also, the data utilized with the models may include historical data, empirical data, knowledge-based data, and so forth. Alternative, to utilizing a simple electronic control algorithm, the controller may utilize a model-based/model-predictive control to predict the pressures in the system 10 via physics models and adjust the wastegate 46 accordingly. In certain embodiments, the controller 22 may be a PI/PID controller that adjusts the wastegate positions based solely on the reserve.

FIG. 3 is a flow chart of an embodiment of a computer-implemented method 60 for controlling a wastegate position. All or some of the steps of the method 60 may be executed by the controller 22 (e.g., utilizing the processor 58 to execute programs and access data stored on the memory 56). The method 60 includes receiving a signal representative of the intake manifold pressure measurement from the sensor 54 (block 62). The method 60 also includes receiving a signal representative of the compressor discharge or boost pressure measurement from the sensor 52 (block 64). The method 60 further includes determining the pressure differential across the throttle or the throttle reserve based on the signals received from the sensors 52, 54 (block 66). The method 60 yet further includes utilizing the determined throttle reserve as the sole inputted parameter in an electronic control algorithm to determine a position of the wastegate 46 (e.g., percentage open, percentage closed, angle, etc.) (block 68). The electronic control algorithm may be as described above. The method 60 still further includes outputting a control action (block 70). The control action includes adjusting the wastegate 46 (e.g., in response to control signal provided to one or more actuators coupled to the wastegate 46 from the controller 22) to the position determined via the electronic control algorithm. The control action may also include maintain the position of the wastegate 46 if the reserve is within a desired reserve operating range (e.g., approximately 33.86 to 47.41 kPa).

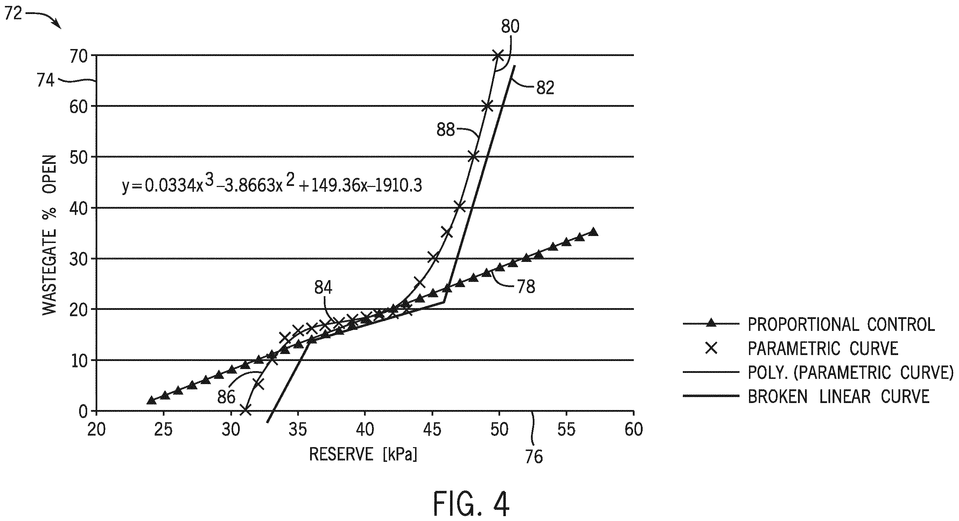

FIG. 4 is a graphical representation 72 of parametric curve-based control versus proportional-based control of the wastegate 46. The graphical representation 72 includes a y-axis 74 representing a position of the wastegate 46. As depicted, the y-axis represents the percentage open of the wastegate 46. In other embodiments, the y-axis could represent a percentage closed of the wastegate 46 or an angle of the wastegate. The graphical representation 72 includes an x-axis 76 representing the pressure differential across the throttle 24 or throttle reserve in kPa. The graphical representation 72 includes a line 78 representing a first order equation for proportional control of the wastegate position relative to the reserve. The graphical representation 72 also includes a curve 80 (e.g., nonlinear parametric curve representative of Eq. 1) representing a third order equation for control of the wastegate position relative to the reserve utilizing the electronic control algorithm described above. The graphical representation 72 also includes a broken linear curve 82 that represents an approximation of the curve 80. As depicted, the curve 80 includes a first portion 84 representing a desired reserve operating range (e.g., approximately 33.86 to 47.41 kPa), a second portion 86 representing a lower reserve range outside the desired reserve operating range, and a third portion 88 representing a higher reserve range outside the desired reserve operating range. The first portion 84 of the curve 80 has a first rate of adjustment of the position of the wastegate 46, the second portion 86 of the curve has a second rate of adjustment of the position of the wastegate 46, the third portion 88 of the curve 80 has a third rate of adjustment of the position of the wastegate 46, and both the second and third rates of adjustment are greater than the first rate of adjustment (i.e., the slopes of the second and third portions 86, 88 are greater than the slope of the first portion 84). As noted above, utilizing the electronic control algorithm, the controller 22 may be able to respond faster than a mechanical proportional control approach to the reserve being outside a desired operating range. For example, as depicted, line 78 has a constant slope regardless of the reserve value. In contrast, as depicted, the second and third portions 86, 88 of the curve 80 result depict a faster response when the reserve value is outside the desired reserve operating range, while the response is slower when the reserve value is within the desired reserve operating range. Thus, in the presence of extreme low reserve or extreme high reserve (e.g., near turbo surge) outside the desired operating range, the controller 22 may adjust the position of the wastegate valve 46 quicker than if the reserve is within the desired operating range.

Technical effects of the disclosed embodiments include providing systems and methods for controlling the wastegate position with a simple electronic control algorithm (e.g., having a single input and single output). Indeed, the pressure differential (e.g., reserve) between the compressor discharge pressure (e.g., boost pressure) and the intake manifold pressure may be solely utilized in controlling the wastegate. For example, the pressure differential may serve as the sole input in the electronic control algorithm (e.g., nonlinear parametric equation). The simple electronic control algorithm enables a faster response in adjusting the wastegate in response to extreme low or high throttle reserves without gain scheduling, while also providing a more stable engine operation inside the desired operating window. Also, the simple electronic control algorithm removes the opportunity for configuration errors when selecting calibration. It also avoids the need for a learning algorithm and its associated complexities. Further, it requires no additional hardware. Overall, the simple electronic control algorithm provides a wastegate control system that is less complex and more efficient that improves the efficiency of the engine system.

This written description uses examples to disclose the invention, including the preferred mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

**Claims**

1. A system (10), comprising:

   an internal combustion engine (16) comprising an intake manifold (18) and a throttle (24) disposed upstream of the intake manifold;
   a turbocharger (26) coupled to the internal combustion engine (16), wherein the turbocharger (26) comprises a turbine (30) and a compressor (28);
   a wastegate (46) coupled to the turbine; and
   a controller (22) configured to receive a first signal representative of a compressor discharge pressure from a first sensor (52) and a second signal representative of an intake manifold pressure from a second sensor (54), to determine a differential pressure across the throttle (24) based on the first and second signals, to determine a position of the wastegate (46) solely based on the differential pressure, and to adjust the wastegate (46) to the position,

   **characterised in that** the controller (22) is configured to utilize a nonlinear parametric equation to determine and to adjust the position of the wastegate, wherein the nonlinear parametric equation defines a curve (80) that represents the position of the wastegate (46) relative to the differential pressure, the curve (80) comprises a first portion (84) representing a desired reserve operating range, a second portion (86) representing a lower reserve range outside the desired reserve operating range, and a third portion (88) representing a higher reserve range outside the desired reserve operating range, and wherein the first portion (84) of the curve (80) has a first rate of adjustment of the position of the wastegate (46), the second portion (86) of the curve (80) has a second rate of adjustment of the position of the wastegate (46), the third portion (88) of the curve (80) has a third rate of adjustment of the position of the wastegate (46), and both the second and third rates of adjustment are greater than the first rate of adjustment.

2. The system (10) of claim 1, wherein the nonlinear parametric equation comprises a univariate polynomial.

3. The system (10) of claim 2, wherein the univariate polynomial comprises a third order polynomial.

4. The system (10) of any preceding claim, wherein the controller (22) is configured to adjust the position of the wastegate (46) without gain scheduling.

5. The system (10) of any preceding claim, comprising the first sensor (52) disposed along a flow path between the turbocharger and the internal combustion engine, wherein the first sensor is disposed upstream of both the throttle and the intake manifold, and the first sensor (52) is configured to measure the compressor discharge pressure, and comprising the second sensor disposed along the flow path downstream of the first sensor between the throttle and the intake manifold, wherein the second sensor (54) is configured to measure the intake manifold pressure.

6. A method (60) for controlling a wastegate (46) being part of a system according to any one of claims 1-5 coupled to a turbine of a turbocharger (26) coupled to an internal combustion engine (16), comprising:

   utilizing a controller (22) for:

      receiving a first signal representative of a compressor discharge pressure from a first sensor (52);
      receiving a second signal representative of an intake manifold pressure from a second sensor (54);
      determining a differential pressure across a throttle (24) of the internal combustion engine based on the first and second signals;
      determining a position of a wastegate (46) solely based on the differential pressure; and
      adjusting the wastegate (46) to the position,

   wherein determining and adjusting the position of the wastegate (46) comprises utilizing a nonlinear parametric equation to determine and to adjust the position of the wastegate, wherein the nonlinear parametric equation defines a curve that represents the position of the wastegate (46) relative to the differential pressure, the curve (80) comprises a first portion (84) representing a desired reserve operating range, a second portion (86) representing a lower reserve range outside the desired reserve operating range, and a third portion (88) representing a higher reserve range outside the desired reserve operating range, and wherein the first portion (84) of the curve (80) has a first rate of adjustment of the position of the wastegate (46), the second portion of the curve (80) has a second rate of adjustmnet of the position of the wstegate (46), the third portion of the curve (80) has a third rate of adjustment of the position of the wastegate (46), and both the second and the third rates of adjustments are greater than the first rate of adjustment.

7. The method (60) of claim 6, wherein the nonlinear parametric equation comprises a univariate polynomial.

8. The method (60) of claim 7, wherein the univariate polynomial comprises a third order polynomial.

9. The method (60) of any of claims 6 to 8, comprising adjusting the position of the wastegate (46) solely without gain scheduling.

10. The method (60) of any of claims 6 to 9, comprising adjusting the position of the wastegate (46) at a first rate when the differential pressure is outside of a desired differential pressure range, and adjusting the position of the wastegate at a second rate when the differential pressure is within the desired differential pressure range, wherein the first rate is different from the second rate.

11. One or more non-transitory computer-readable media encoding one or more processor-executable routines, wherein the one or more routines, when executed by a processor, cause acts to be performed comprising the steps according to the method of claims 6-10
receiving a first signal representative of a compressor discharge pressure from a first sensor;
receiving a second signal representative of an intake manifold pressure from a second sensor;
determining a differential pressure across a throttle of an internal combustion engine based on the first and second signals; determining a position of a wastegate (46) solely based on the differential pressure, wherein the wastegate (46) is coupled to a turbocharger (12) comprising a turbine (30), and the turbocharger is coupled to the internal combustion engine (16); and
adjusting the wastegate (46) to the position;
wherein determining and adjusting the position of the wastegate (46) comprises utilizing a nonlinear parametric equation to determine and to adjust the position of the wastegate (46).

## Patentansprüche

1. System (10), umfassend:

Verbrennungsmotor (16), der ein Ansaugrohr (18) und eine Drossel (24) umfasst, die dem Ansaugrohr vorgeschaltet angeordnet ist;
einen Turbolader (26), der an den Verbrennungsmotor (16) gekoppelt ist, wobei der Turbolader (26) eine Turbine (30) und einen Verdichter (28) umfasst;
ein Bypassventil (46), das an die Turbine gekoppelt ist; und
eine Steuereinrichtung (22), die konfiguriert ist, ein erstes Signal, das einen Druck am Verdichterauslass darstellt, von einem ersten Sensor (52) und ein zweites Signal, das einen Druck am Ansaugrohr darstellt, von einem zweiten Sensor (54) zu empfangen, um einen Differenzdruck über die Drossel (24) auf Basis des ersten und des zweiten Signals zu ermitteln, um eine Position des Bypassventils (46) einzig auf Basis des Differenzdrucks zu ermitteln und um das Bypassventil (46) auf die Position anzupassen,
**dadurch gekennzeichnet, dass** die Steuereinrichtung (22) konfiguriert ist, eine nichtlineare parametrische Gleichung einzusetzen, um die Position des Bypassventils zu ermitteln und anzupassen, wobei die nichtlineare parametrische Gleichung eine Kurve (80) definiert, die die Position des Bypassventils (46) relativ zum Differenzdruck darstellt, die Kurve (80) einen ersten Abschnitt (84), der einen gewünschten Reservebetriebsbereich darstellt, einen zweiten Abschnitt (86), der einen unteren Reservebereich außerhalb des gewünschten Reservebetriebsbereichs darstellt, und einen dritten Abschnitt (88) umfasst, der einen oberen Reservebereich außerhalb des gewünschten Reservebetriebsbereichs darstellt, und wobei der erste Abschnitt (84) der Kurve (80) eine erste Anpassungsrate der Position des Bypassventils (46) aufweist, der zweite Abschnitt (86) der Kurve (80) eine zweite Anpassungsrate der Position des Bypassventils (46) aufweist, der dritte Abschnitt (88) der Kurve (80) eine dritte Anpassungsrate der Position des Bypassventils (46) aufweist und sowohl die zweite als auch die dritte Anpassungsrate größer als die erste Anpassungsrate sind.

2. System (10) nach Anspruch 1, wobei die nichtlineare parametrische Gleichung ein univariates Polynom umfasst.

3. System (10) nach Anspruch 2, wobei das univariate Polynom ein Polynom dritten Grades umfasst.

4. System (10) nach einem der vorangehenden Ansprüche, wobei die Steuereinrichtung (22) konfiguriert ist, die Position des Bypassventils (46) ohne Gain-Scheduling anzupassen.

5. System (10) nach einem der vorangehenden Ansprüche, das den ersten Sensor (52) umfasst, der entlang eines Strömungspfades zwischen dem Turbolader und dem Verbrennungsmotor angeordnet ist, wobei der erste Sensor sowohl der Drossel als auch dem Ansaugrohr vorgeschaltet angeordnet ist und der erste Sensor (52) konfiguriert ist, den Druck am Verdichterauslass zu messen, und das den zweiten Sensor umfasst, der entlang des Strömungspfads dem ersten Sensor nachgeschaltet zwischen der Drossel und dem Ansaugrohr angeordnet ist, wobei der zweite Sensor (54) konfiguriert ist, den Druck am Ansaugrohr zu messen.

6. Verfahren (60) zum Steuern eines Bypassventils (46), das Teil eines Systems nach einem der Ansprüche 1-5 ist, das an eine Turbine eines Turboladers (26) gekoppelt ist, der an einen Verbrennungsmotor (16) gekoppelt ist, wobei das Verfahren umfasst:

   Einsetzen einer Steuereinrichtung (22) zum:

      Empfangen eines ersten Signals, das einen Druck am Verdichterauslass darstellt, von einem ersten Sensor (52);
      Empfangen eines zweiten Signals, das einen Druck am Ansaugrohr darstellt, von einem zweiten Sensor (54);
      Ermitteln eines Differenzdrucks über eine Drossel (24) des Verbrennungsmotors auf Basis des ersten und des zweiten Signals;
      Ermitteln einer Position eines Bypassventils (46) einzig auf Basis des Differenzdrucks; und
      Anpassen des Bypassventils (46) auf die Position,

   wobei das Ermitteln und Anpassen der Position des Bypassventils (46) ein Einsetzen einer nichtlinearen parametrischen Gleichung umfasst, um die Position des Bypassventils zu ermitteln und anzupassen, wobei die nichtlineare parametrische Gleichung eine Kurve definiert, die die Position des Bypassventils (46) relativ zum Differenzdruck darstellt, die Kurve (80) einen ersten Abschnitt (84), der einen gewünschten Reservebetriebsbereich darstellt, einen zweiten Abschnitt (86), der einen unteren Reservebereich außerhalb des gewünschten Reservebetriebsbereichs darstellt, und einen dritten Abschnitt (88) umfasst, der einen oberen Reservebereich außerhalb des gewünschten Reservebetriebsbereichs darstellt, und wobei der erste Abschnitt (84) der Kurve (80) eine erste Anpassungsrate der Position des Bypassventils (46) aufweist, der zweite Abschnitt der Kurve (80) eine zweite Anpassungsrate der Position des Bypassventils (46) aufweist, der dritte Abschnitt der Kurve (80) eine dritte Anpassungsrate der Position des Bypassventils (46) aufweist und sowohl die zweite als auch die dritte Anpassungsrate größer als die erste Anpassungsrate sind.

7. Verfahren (60) nach Anspruch 6, wobei die nichtlineare parametrische Gleichung ein univariates Polynom umfasst.

8. Verfahren (60) nach Anspruch 7, wobei das univariate Polynom ein Polynom dritten Grades umfasst.

9. Verfahren (60) nach einem der Ansprüche 6 bis 8, das das Anpassen der Position des Bypassventils (46) ganz ohne Gain-Scheduling umfasst.

10. Verfahren (60) nach einem der Ansprüche 6 bis 9, das ein Anpassen der Position des Bypassventils (46) mit einer ersten Anpassungsrate umfasst, wenn sich der Differenzdruck außerhalb eines gewünschten Differenzdruckbereichs befindet, und Anpassen der Position des Bypassventils mit einer zweiten Anpassungsrate umfasst, wenn sich der Differenzdruck innerhalb des gewünschten Differenzdruckbereichs befindet, wobei die erste Rate von der zweiten Rate verschieden ist.

11. Nicht transitorisches computerlesbares Medium oder mehrere nicht transitorische computerlesbare Medien, das bzw. die ein oder mehrere prozessorausführbare Routinen codiert bzw. codieren, wobei die eine oder mehreren Routinen bewirken, wenn sie von einem Prozessor ausgeführt werden, dass Vorgänge durchgeführt werden, die die Schritte nach dem Verfahren der Ansprüche 6-10 umfassen,

Empfangen eines ersten Signals, das einen Druck am Verdichterauslass darstellt, von einem ersten Sensor;

Empfangen eines zweiten Signals, das einen Druck am Ansaugrohr darstellt, von einem zweiten Sensor;

Ermitteln eines Differenzdrucks über die Drossel eines Verbrennungsmotors auf Basis des ersten und des zweiten Signals;

Ermitteln einer Position eines Bypassventils (46) einzig auf Basis des Differenzdrucks, wobei das Bypassventil (46) an einen Turbolader (12) gekoppelt ist, der eine Turbine (30) umfasst, und der Turbolader an den Verbrennungsmotor (16) gekoppelt ist; und

Anpassen des Bypassventils (46) auf die Position; wobei das Ermitteln und Anpassen der Position des Bypassventils (46) ein Einsetzen einer nichtlinearen parametrischen Gleichung umfasst, um die Position des Bypassventils (46) zu ermitteln und anzupassen.

**Revendications**

1. Système (10), comprenant :

    un moteur à combustion interne (16) comprenant un collecteur d'admission (18) et un accélérateur (24) disposé en amont du collecteur d'admission ;
    un turbocompresseur (26) couplé au moteur à combustion interne (16), le turbocompresseur (26) comprenant une turbine (30) et un compresseur (28) ;
    une soupape de décharge (46) couplée à la turbine ; et
    un contrôleur (22) conçu pour recevoir d'un premier capteur (52) un premier signal représentatif d'une pression de décharge de compresseur et recevoir d'un deuxième capteur (54) un deuxième signal représentatif d'une pression de collecteur d'admission, pour déterminer une pression différentielle de part et d'autre de l'accélérateur (24) d'après les premier et deuxième signaux, pour déterminer une position de la soupape de décharge (46) uniquement d'après la pression différentielle, et pour régler la soupape de décharge (46) sur la position,

    **caractérisé en ce que** le contrôleur (22) est conçu pour utiliser une équation paramétrique non linéaire pour déterminer et pour régler la position de la soupape de décharge, l'équation paramétrique non linéaire définissant une courbe (80) qui représente la position de la soupape de décharge (46) en fonction de la pression différentielle, la courbe (80) comprenant une première partie (84) représentant une plage de fonctionnement de réserve souhaitée, une deuxième partie (86) représentant une plage de réserve inférieure située en dehors de la plage de fonctionnement de réserve souhaitée, et une troisième partie (88) représentant une plage de réserve supérieure située en dehors de la plage de fonctionnement de réserve souhaitée, et
    la première partie (84) de la courbe (80) comportant une première vitesse de réglage de la position de la soupape de décharge (46), la deuxième partie (86) de la courbe (80) comportant une deuxième vitesse de réglage de la position de la soupape de décharge (46), la troisième partie (88) de la courbe (80) comportant une troisième vitesse de réglage de la position de la soupape de décharge (46), et les deuxième et troisième vitesses de réglage étant supérieures à la première vitesse de réglage.

2. Système (10) selon la revendication 1, dans lequel l'équation paramétrique non linéaire comprend une fonction polynomiale à une variable.

3. Système (10) selon la revendication 2, dans lequel la fonction polynomiale à une variable comprend une fonction polynomiale du troisième ordre.

4. Système (10) selon l'une quelconque des revendications précédentes, dans lequel le contrôleur (22) est conçu pour régler la position de la soupape de décharge (46) sans planification de gain.

5. Système (10) selon l'une quelconque des revendications précédentes, comprenant le premier capteur (52) disposé le long d'un trajet d'écoulement entre le turbocompresseur et le moteur à combustion interne, le premier capteur étant disposé en amont de l'accélérateur et du collecteur d'admission, et le premier capteur (52) étant conçu pour mesurer la pression de décharge de compresseur, et comprenant le deuxième capteur disposé le long du trajet d'écoulement en aval du premier capteur entre l'accélérateur et le collecteur d'admission, le deuxième capteur (54) étant conçu pour mesurer la pression de collecteur d'admission.

**6.** Procédé (60) servant à commander une soupape de décharge (46) faisant partie d'un système selon l'une quelconque des revendications 1 à 5, couplée à une turbine d'un turbocompresseur (26) couplé à un moteur à combustion interne (16), comprenant les étapes consistant à :

utiliser un contrôleur (22) pour :

recevoir d'un premier capteur (52) un premier signal représentatif d'une pression de décharge de compresseur ;
recevoir d'un deuxième capteur (54) un deuxième signal représentatif d'une pression de collecteur d'admission ;
déterminer une pression différentielle de part et d'autre d'un accélérateur (24) du moteur à combustion interne d'après les premier et deuxième signaux ;
déterminer une position d'une soupape de décharge (46) uniquement d'après la pression différentielle ; et
régler la soupape de décharge (46) sur la position,

dans lequel la détermination et le réglage de la position de la soupape de décharge (46) comprend l'étape consistant à utiliser une équation paramétrique non linéaire pour déterminer et pour régler la position de la soupape de décharge, l'équation paramétrique non linéaire définissant une courbe qui représente la position de la soupape de décharge (46) en fonction de la pression différentielle, la courbe (80) comprenant une première partie (84) représentant une plage de fonctionnement de réserve souhaitée, une deuxième partie (86) représentant une plage de réserve inférieure située en dehors de la plage de fonctionnement de réserve souhaitée, et une troisième partie (88) représentant une plage de réserve supérieure située en dehors de la plage de fonctionnement de réserve souhaitée, la première partie (84) de la courbe (80) comportant une première vitesse de réglage de la position de la soupape de décharge (46), la deuxième partie de la courbe (80) comportant une deuxième vitesse de réglage de la position de la soupape de décharge (46), la troisième partie de la courbe (80) comportant une troisième vitesse de réglage de la position de la soupape de décharge (46), et les deuxième et troisième vitesses de réglage étant supérieures à la première vitesse de réglage.

**7.** Procédé (60) selon la revendication 6, dans lequel l'équation paramétrique non linéaire comprend une fonction polynomiale à une variable.

**8.** Procédé (60) selon la revendication 7, dans lequel la fonction polynomiale à une variable comprend une fonction polynomiale du troisième ordre.

**9.** Procédé (60) selon l'une quelconque des revendications 6 à 8, comprenant l'étape consistant à régler la position de la soupape de décharge (46) uniquement sans planification de gain.

**10.** Procédé (60) selon l'une quelconque des revendications 6 à 9, comprenant l'étape consistant à régler la position de la soupape de décharge (46) à une première vitesse lorsque la pression différentielle se situe en dehors d'une plage de pressions différentielles souhaitée, et régler la position de la soupape de décharge à une deuxième vitesse lorsque la pression différentielle se situe dans la plage de pressions différentielles souhaitée, la première plage étant différente de la deuxième plage.

**11.** Un ou plusieurs supports non transitoires lisibles par ordinateur servant à coder une ou plusieurs routines exécutables par processeur, lesdites une ou plusieurs routines, lorsqu'elles sont exécutées par un processeur, produisant l'exécution d'actions comprenant les étapes du procédé des revendications 6 à 10 :

recevoir d'un premier capteur un premier signal représentatif d'une pression de décharge de compresseur ;
recevoir d'un deuxième capteur un deuxième signal représentatif d'une pression de collecteur d'admission ;
déterminer une pression différentielle de part et d'autre d'un accélérateur d'un moteur à combustion interne d'après les premier et deuxième signaux ; déterminer une position d'une soupape de décharge (46) uniquement d'après la pression différentielle,

la soupape de décharge (46) étant couplée à un turbocompresseur (12) comprenant une turbine (30), et le turbocompresseur étant couplé au moteur à combustion interne (16) ; et
régler la soupape de décharge (46) sur la position ;
la détermination et le réglage de la position de la soupape de décharge (46) comprenant l'utilisation d'une équation paramétrique non linéaire pour déterminer et pour régler la position de la soupape de décharge (46).

FIG. 1

EP 3 048 280 B1

22

INPUT 1 → | ECU | → OUTPUT 1
INPUT 2 → | | → OUTPUT 2
INPUT 3 → | 56    58 | → OUTPUT 3
⋮ | [M]——[P] | ⋮
INPUT n → | | → OUTPUT n

## FIG. 2

60

62 — RECEIVE INTAKE MANIFOLD PRESSURE MEASUREMENT

RECEIVE BOOST PRESSURE MEASUREMENT — 64

DETERMINE THROTTLE RESERVE — 66

UTILIZE THROTTLE RESERVE AS ONLY PARAMETER IN ELECTRONIC CONTROL ALGORITHM — 68

OUTPUT CONTROL ACTION — 70

## FIG. 3

FIG. 4

$$y = 0.0334x^3 - 3.8663x^2 + 149.36x - 1910.3$$

Legend:
- ▲ PROPORTIONAL CONTROL
- ✕ PARAMETRIC CURVE
- — POLY. (PARAMETRIC CURVE)
- **—** BROKEN LINEAR CURVE

EP 3 048 280 B1

**REFERENCES CITED IN THE DESCRIPTION**

**Patent documents cited in the description**

- EP 2803842 A1
- WO 02061255 A2
- US 2014060041 A1
- US 2009090107 A1